# EUROPÄISCHE PATENTANMELDUNG

(11) **EP 2 978 097 A1**
(43) Veröffentlichungstag der Anmeldung: **27.01.2016**
(21) Anmeldenummer: 14178197.1
(22) Anmeldetag: 23.07.2014
(51) Int. Cl.: H02J 5/00, H05B 7/00, C23C 4/12, B23K 11/24, B23K 9/00

(54) **Speisung von Schmelzelektroden über Umrichter**

(71) Anmelder: Siemens Aktiengesellschaft, 80333 München (DE)
(72) Erfinder: Bönke, Daniel, 90459 Nürnberg (DE); Spindler, Carsten, 07368 Remptendorf (DE); Tolkmitt, Tom, 90768 Fürth (DE)

(57) **Zusammenfassung**

Eine Schmelzelektroden (7) speisende Energieversorgungseinrichtung (1) weist einen netzgespeisten ersten Gleichrichter (2) auf, dem ein erster Wechselrichter (4) nachgeordnet ist. Der erste Wechselrichter (4) ist über einen Transformator (5) mit einem zweiten Gleichrichter (6) verbunden, der seinerseits mit den Schmelzelektroden (7) verbunden ist.

## Beschreibung

Die vorliegende Erfindung betrifft eine Schmelzelektroden speisende Energieversorgungseinrichtung.

Derartige Energieversorgungseinrichtungen sind allgemein bekannt. Sie weisen in der Regel einen Transformator auf, der eine Versorgungsspannung (in der Regel 230 V Einphasen-Wechselstrom oder 400 V Dreiphasen-Wechselstrom) auf eine erheblich niedrigere Spannung im Bereich von ca. 20 V bis ca. 40 V herunter transformiert. Dem Transformator ist ein Gleichrichter nachgeordnet, der die Ausgangsspannung des Transformators gleichrichtet. Dem Gleichrichter wiederum ist ein Stromsteller nachgeordnet, der die Schmelzelektroden mit dem gewünschten Gleichstrom - meist in der Größenordnung zwischen 200 A und 300 A - versorgt. Üblicherweise kann einer Steuereinrichtung der Energieversorgungseinrichtung eine Strom-Spannung-Kennlinie vorgegeben werden, beispielsweise Konstantspannung oder eine fallende Kennlinie, d.h. der Strom fällt mit steigender Spannung ab.

Derartige Schmelzelektroden und die zugehörigen Energieversorgungseinrichtungen werden auch in Verbindung mit bewegungsgesteuerten Einrichtungen verwendet, beispielsweise bei der Anwendung des sogenannten Lichtbogendrahtspritz-Verfahrens, mittels dessen Laufflächen von Zylindern von Verbrennungsmotoren thermisch mit einem Metallbelag beschichtet werden. Bei diesem Verfahren wird zwischen zwei drahtförmigen Spritzwerkstoffen ein Lichtbogen gezündet. Die so entstandene Schmelze wird mittels eines Zerstäubergases - beispielsweise Stickstoff - mit hohem Druck auf die zu beschichtende Oberfläche des Werkstücks geblasen. Die elektrische Energieversorgungseinrichtung, die den Lichtbogen speist, entspricht einer üblichen Energieversorgungseinrichtung für Schmelzelektroden. Das zugehörige Gerät ist in der Regel ein eigenständiges Gerät. Es ist sowohl in automatisierungstechnischer Hinsicht nicht in die Steuerung der bewegungsgesteuerten Einrichtung eingebunden als auch in energietechnischer Hinsicht nicht in die Energieversorgung der bewegungsgesteuerten Einrichtung eingebunden.

Die Aufgabe der vorliegenden Erfindung besteht darin, eine Energieversorgungseinrichtung zu schaffen, die einfach und kompakt aufgebaut ist und bei der darüber hinaus eine derartige Einbindung in die bewegungsgesteuerte Einrichtung erleichtert ist.

Die Aufgabe wird durch eine Energieversorgungseinrichtung mit den Merkmalen des Anspruchs 1 gelöst. Vorteilhafte Ausgestaltungen der Energieversorgungseinrichtung sind Gegenstand der abhängigen Ansprüche 2 bis 7.

Erfindungsgemäß wird eine Energieversorgungseinrichtung der eingangs genannten Art dadurch ausgestaltet,
- dass die Energieversorgungseinrichtung einen netzgespeisten ersten Gleichrichter aufweist, dem ein erster Wechselrichter nachgeordnet ist, und
- dass der erste Wechselrichter über einen Transformator mit einem zweiten Gleichrichter verbunden ist, der seinerseits mit den Schmelzelektroden verbunden ist.

Aufgrund des Vorhandenseins des ersten Wechselrichters ist es möglich, den Transformator mit einer Wechselspannung zu versorgen, deren Frequenz erheblich größer als die übliche Netzfrequenz von 50 Hz bzw. 60 Hz ist. Bei gleicher mittels des Transformators zu transformierender elektrischer Leistung kann der Transformator daher erheblich kompakter gestaltet werden.

In einer einfachen Ausgestaltung ist der erste Wechselrichter einphasig ausgebildet. In der Regel ist der erste Wechselrichter jedoch dreiphasig ausgebildet.

Vorzugsweise wird einer Steuereinrichtung der Energieversorgungseinrichtung ein Sollbetriebsparameter eines Schmelzvorgangs zugeführt und steuert die Steuereinrichtung den ersten Wechselrichter in Abhängigkeit von dem ihr zugeführten Sollbetriebsparameter des Schmelzvorgangs. Der Sollbetriebsparameter des Schmelzvorgangs kann beispielsweise ein Strom sein, mit dem die Schmelzelektroden betrieben werden sollen oder den der Wechselrichter in den Transformator einspeisen soll. Alternativ kann es sich um eine Spannung handeln, mit der die Schmelzelektroden betrieben werden sollen oder die der Wechselrichter an den Transformator anlegen soll. Auch kann es sich um eine den Schmelzelektroden oder dem Transformator zuzuführende Leistung handeln.

Es ist möglich, dass der erste Gleichrichter zusätzlich zum ersten Wechselrichter mindestens einen zweiten Wechselrichter speist und dass der zweite Wechselrichter mit einem elektrischen Antrieb verbunden ist. Diese Ausgestaltung integriert das zugehörige Gerät in die Energieversorgung der bewegungsgesteuerten Einrichtung.

Besonders bevorzugt ist, dass der zweite Wechselrichter baugleich zu dem ersten Wechselrichter ist. Der erste und der zweite Wechselrichter könnten also jederzeit ihre Rollen tauschen. Diese Ausgestaltung vereinfacht die Ersatzteilhaltung und Logistik.

Es ist möglich, dass eine Steuereinrichtung zum Steuern des zweiten Wechselrichters eine von der Steuereinrichtung zum Steuern des ersten Wechselrichters verschiedene Einrichtung ist. Alternativ kann es sich um eine einheitliche Steuereinrichtung handeln. In diesem Fall wird der Steuereinrichtung - zusätzlich zum Sollbetriebsparameter des Schmelzvorgangs - ein Sollbetriebsparameter für den elektrischen Antrieb zugeführt. Weiterhin steuert die Steuereinrichtung in diesem Fall - zusätzlich zur Steuerung des ersten Wechselrichters in Abhängigkeit von dem ihr zugeführten Sollbetriebsparameter des Schmelzvorgangs - den zweiten Wechselrichter in Abhängigkeit von dem ihr zugeführten Sollbetriebsparameter für den elektrischen Antrieb. Es erfolgt also eine einheitliche Steuerung beider Wechselrichter, so dass die Steuerung des Schmelzvorgangs in die Automatisierung und Steuerung der bewegungsgesteuerten Einrichtung eingebunden bzw. integriert ist. Der Sollbetriebsparameter für den elektrischen Antrieb kann beispielsweise alternativ ein dem Antrieb zuzuführender Strom, ein vom Antrieb abzugebendes Moment, eine Drehzahl des Antriebs oder dessen Lage sein.

Es ist weiterhin bevorzugt, dass von der Steuereinrichtung Betriebsparameter des ersten Wechselrichters erfasst werden, dass die erfassten Betriebsparameter mit Erwartungswerten verglichen werden und dass in Abhängigkeit von dem Vergleich eine Meldung an einen Bediener und/oder eine übergeordnete Steuereinrichtung ausgegeben wird. Dadurch ist es beispielsweise möglich, bereits anhand der erfassten Betriebsparameter eine Vorauswertung dahingehend vorzunehmen, ob mittels des Schmelzvorgangs ein ordnungsgemäßes Ergebnis erreicht wurde.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Schmelzelektroden speisende Energieversorgungseinrichtung und
- FIG 2: eine Erweiterung der Energieversorgungseinrichtung von FIG 1.

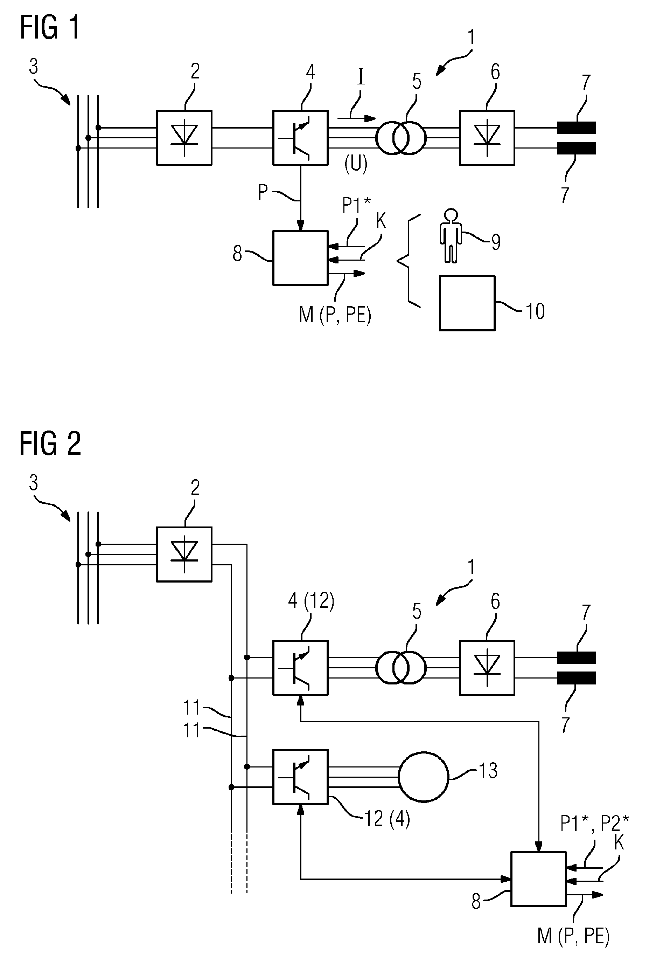

Gemäß FIG 1 weist eine Energieversorgungseinrichtung 1 einen ersten Gleichrichter 2 auf. Der erste Gleichrichter 2 wird aus einem Versorgungsnetz 3 gespeist. Bei dem Versorgungsnetz 3 kann es sich insbesondere um das übliche Niederspannungs-Versorgungsnetz (3∼, 400 V) handeln. Der erste Gleichrichter 2 kann als ungesteuerter Diodengleichrichter ausgebildet sein. Alternativ kann der erste Gleichrichter 2 als gesteuerter Gleichrichter ausgebildet sein, insbesondere als rückspeisefähiger Umrichter.

Dem ersten Gleichrichter 2 ist ein Wechselrichter 4 nachgeordnet. Der Wechselrichter 4 ist über einen Transformator 5 mit einem zweiten Gleichrichter 6 verbunden. Der zweite Gleichrichter 6 ist seinerseits mit Schmelzelektroden 7 verbunden. Im Ergebnis werden daher über die Energieversorgungseinrichtung 1 die Schmelzelektroden 7 gespeist. Es ist möglich, dass der Wechselrichter 4 und der Transformator 5 einphasig ausgebildet sind. In der Regel sind der Wechselrichter 4 und der Transformator 5 jedoch dreiphasig ausgebildet. Der zweite Gleichrichter 6 kann als ungesteuerter Diodengleichrichter ausgebildet sein.

Im Betrieb der Energieversorgungseinrichtung 1 wird in der Regel einer Steuereinrichtung 8 der Energieversorgungseinrichtung 1 ein Sollbetriebsparameter P1* eines Schmelzvorgangs zugeführt. Der Sollbetriebsparameter P1* kann der Steuereinrichtung 8 beispielsweise von einem Benutzer 9 oder von einer übergeordneten Steuereinrichtung 10 zugeführt werden. Die Steuereinrichtung 8 steuert den Wechselrichter 4 in Abhängigkeit von dem ihr zugeführten Sollbetriebsparameter P1* des Schmelzvorgangs. Die Steuereinrichtung 8 kann im Rahmen der Steuerung des Wechselrichters 4 eine Strom-Spannung-Kennlinie K berücksichtigen. Die Kennlinie K kann der Steuereinrichtung 8 fest vorgegeben sein. Alternativ ist es entsprechend der Darstellung in FIG 1 möglich, dass die Kennlinie K der Steuereinrichtung 8 von außerhalb der Steuereinrichtung 8 vorgegeben wird, beispielsweise vom Benutzer 9 oder von der übergeordneten Steuereinrichtung 10.

Vorzugsweise erfasst die Steuereinrichtung 8 im Betrieb der Energieversorgungseinrichtung 1 weiterhin wiederholt jeweils (mindestens) einen Betriebsparameter P des Wechselrichters 4. Bei dem erfassten Betriebsparameter P kann es sich beispielsweise um den vom Wechselrichter 4 abgegebenen Strom I oder die vom Wechselrichter 4 an den Transformator 5 angelegte Spannung U handeln. Es ist auch möglich, sowohl den Strom I als auch die Spannung U zu erfassen. Die Steuereinrichtung 8 kann die erfassten Betriebsparameter P innerhalb der Steuereinrichtung 8 mit Erwartungswerten PE vergleichen. In Abhängigkeit von dem Vergleich kann die Steuereinrichtung 8 beispielsweise eine Meldung M generieren, die an den Bediener 9 und/oder an die übergeordnete Steuereinrichtung 10 ausgegeben wird.

FIG 2 zeigt eine Erweiterung der Energieversorgungseinrichtung 1 von FIG 1. Gemäß FIG 2 speist der erste Gleichrichter 2 Stromschienen 11, wobei an die Stromschienen 11 nicht nur der Wechselrichter 4 der Schmelzelektroden 7 angeschlossen ist, sondern auch (mindestens) ein weiterer Wechselrichter 12. Bei der Ausgestaltung gemäß FIG 2 speist somit insbesondere der erste Gleichrichter 2 beide Wechselrichter 4, 12. Der weitere Wechselrichter 12 ist gemäß FIG 2 jedoch weder mit dem Transformator 5 noch mit einem weiteren Transformator zur Energieversorgung weiterer Schmelzelektroden, sondern mit einem elektrischen Antrieb 13 verbunden.

Es ist möglich, dass die beiden Wechselrichter 4, 12 unterschiedlich aufgebaut sind. Es ist jedoch ebenso möglich, dass die beiden Wechselrichter 4, 12 baugleich zueinander sind. Dies ist in FIG 2 dadurch angedeutet, dass bei beiden Wechselrichtern 4, 12 in Klammern das jeweils andere Bezugszeichen 12, 4 mit angegeben ist.

Zur Unterscheidung der beiden Wechselrichter 4, 12 voneinander wird nachfolgend, soweit erforderlich, der Wechselrichter 4 der Schmelzelektroden 7 als erster Wechselrichter 4 bezeichnet, der weitere Wechselrichter 12 als zweiter Wechselrichter 12.

Die obenstehend in Verbindung mit FIG 1 beschriebene Betriebsweise der Steuereinrichtung 8 kann, soweit es den ersten Wechselrichter 4 betrifft, unverändert beibehalten werden. Insbesondere kann der Steuereinrichtung 8 auch im Falle der Ausgestaltung gemäß FIG 2 der Sollbetriebsparameter P1* des Schmelzvorgangs zugeführt werden und kann die Steuereinrichtung 8 den ersten Wechselrichter 4 in Abhängigkeit von diesem Sollbetriebsparameter P1* steuern. Auch können die Erfassung des Betriebsparameters P des ersten Wechselrichters 4 und dessen Vergleich mit den zugehörigen Erwartungswerten PE und die Ausgabe der Meldung M erfolgen. Zusätzlich wird der Steuereinrichtung 8 jedoch vorzugsweise ein Sollbetriebsparameter P2* für den elektrischen Antrieb 13 zugeführt. In diesem Fall steuert die Steuereinrichtung 8 den zweiten Wechselrichter 12 in Abhängigkeit von dem ihr zugeführten Sollbetriebsparameter P2* für den elektrischen Antrieb 13.

Zusammengefasst betrifft die vorliegende Erfindung somit folgenden Sachverhalt:
Eine Schmelzelektroden 7 speisende Energieversorgungseinrichtung 1 weist einen netzgespeisten ersten Gleichrichter 2 auf, dem ein erster Wechselrichter 4 nachgeordnet ist. Der erste Wechselrichter 4 ist über einen Transformator 5 mit einem zweiten Gleichrichter 6 verbunden, der seinerseits mit den Schweißelektroden 7 verbunden ist.

Die vorliegende Erfindung weist viele Vorteile auf. Insbesondere ist es möglich, die Energieversorgungseinrichtung kompakt und kostengünstig zu gestalten. Es ergibt sich gegenüber einem konventionellen Gerät ein Einsparpotenzial im fünfstelligen Euro-Bereich. Weiterhin ist es auf einfache Weise möglich, das Gerät in eine bewegungsgesteuerte Einrichtung zu integrieren. Auch vereinfacht sich die Ersatzteilhaltung, da ein und dasselbe Motormodul einer numerischen Steuerung (CNC = numerical control) oder Bewegungssteuerung (motion control) wahlweise zur Speisung der Schmelzelektroden 7 oder zur Stromversorgung des elektrischen Antriebs 13 verwendet werden kann. Für den Anbieter der Automatisierungslösung ergibt sich zusätzlich der Vorteil, dass er eine weitere Komponente der bewegungsgesteuerten Einrichtung (nämlich das Gerät für die Schmelzelektroden 7) mit anbieten kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schmelzelektroden (7) speisende Energieversorgungseinrichtung,
- wobei die Energieversorgungseinrichtung einen netzgespeisten ersten Gleichrichter (2) aufweist, dem ein erster Wechselrichter (4) nachgeordnet ist, und
- wobei der erste Wechselrichter (4) über einen Transformator (5) mit einem zweiten Gleichrichter (6) verbunden ist, der seinerseits mit den Schmelzelektroden (7) verbunden ist.

2. Energieversorgungseinrichtung nach Anspruch 1,
**dadurch gekennzeichnet, dass** der erste Wechselrichter (4) dreiphasig ausgebildet ist.

3. Energieversorgungseinrichtung nach Anspruch 1 oder 2,
**dadurch gekennzeichnet, dass** einer Steuereinrichtung (8) der Energieversorgungseinrichtung ein Sollbetriebsparameter (P1*) eines Schmelzvorgangs zugeführt wird und dass die Steuereinrichtung (8) den ersten Wechselrichter (4) in Abhängigkeit von dem ihr zugeführten Sollbetriebsparameter (P1*) des Schmelzvorgangs steuert.

4. Energieversorgungseinrichtung nach Anspruch 1 oder 2,
**dadurch gekennzeichnet, dass** der erste Gleichrichter (2) zusätzlich zum ersten Wechselrichter (4) mindestens einen zweiten Wechselrichter (12) speist und dass der zweite Wechselrichter (12) mit einem elektrischen Antrieb (13) verbunden ist.

5. Energieversorgungseinrichtung nach Anspruch 4,
**dadurch gekennzeichnet, dass** der zweite Wechselrichter (12) baugleich zu dem ersten Wechselrichter (4) ist.

6. Energieversorgungseinrichtung nach Anspruch 4 oder 5,
**dadurch gekennzeichnet, dass** einer Steuereinrichtung (8) der Energieversorgungseinrichtung ein Sollbetriebsparameter (P1*) eines Schmelzvorgangs zugeführt wird, dass die Steuereinrichtung (8) den ersten Wechselrichter (4) in Abhängigkeit von dem ihr zugeführten Sollbetriebsparameter (P1*) des Schmelzvorgangs steuert, dass der Steuereinrichtung (8) weiterhin ein Sollbetriebsparameter (P2*) für den elektrischen Antrieb (13) zugeführt wird und dass die Steuereinrichtung (8) den zweiten Wechselrichter (12) in Abhängigkeit von dem ihr zugeführten Sollbetriebsparameter (P2*) für den elektrischen Antrieb (13) steuert.

7. Energieversorgungseinrichtung nach Anspruch 4, 5 oder 6,
**dadurch gekennzeichnet, dass** von der Steuereinrichtung (8) Betriebsparameter (P) des ersten Wechselrichters (4) erfasst werden, dass die erfassten Betriebsparameter (P) mit Erwartungswerten (PE) verglichen werden und dass in Abhängigkeit von dem Vergleich eine Meldung (M) an einen Bediener (9) und/oder eine übergeordnete Steuereinrichtung (10) ausgegeben wird.

## Geänderte Patentansprüche

### Geänderte Patentansprüche gemäss Regel 137(2) EPÜ.

1. Elektrische Anordnung,
- wobei die elektrische Anordnung eine Energieversorgungseinrichtung (1), Schmelzelektroden (7) und eine Steuereinrichtung (8) für die Energieversorgungseinrichtung (1) aufweist,
- wobei die Energieversorgungseinrichtung (1) einen netzgespeisten ersten Gleichrichter (2) aufweist, dem ein erster Wechselrichter (4) nachgeordnet ist,
- wobei der erste Wechselrichter (4) über einen Transformator (5) mit einem zweiten Gleichrichter (6) verbunden ist, der seinerseits zur Speisung der Schmelzelektroden (7) mit den Schmelzelektroden (7) verbunden ist,
- wobei die Steuereinrichtung (8) derart ausgebildet ist, dass sie im Betrieb einen Sollbetriebsparameter (P1*) eines Schmelzvorgangs entgegennimmt und den ersten Wechselrichter (4) in Abhängigkeit von dem ihr zugeführten Sollbetriebsparameter (P1*) des Schmelzvorgangs steuert,
**dadurch gekennzeichnet,**
- **dass** der erste Gleichrichter (2) zusätzlich zum ersten Wechselrichter (4) einen zweiten Wechselrichter (12) der elektrischen Anordnung speist,
- **dass** der zweite Wechselrichter (12) mit einem elektrischen Antrieb (13) der elektrischen Anordnung verbunden ist,
- **dass** die Steuereinrichtung (8) derart ausgebildet ist, dass sie im Betrieb einen Sollbetriebsparameter (P2*) für den elektrischen Antrieb (13) entgegennimmt und den zweiten Wechselrichter (12) in Abhängigkeit von dem ihr zugeführten Sollbetriebsparameter (P2*) für den elektrischen Antrieb (13) steuert,
- **dass** der erste Wechselrichter (4) dreiphasig ausgebildet ist und
- **dass** der zweite Wechselrichter (12) baugleich zu dem ersten Wechselrichter (4) ist.

2. Energieversorgungseinrichtung nach Anspruch 1,
**dadurch gekennzeichnet, dass** der Sollbetriebsparameter (P1*) des Schmelzvorgangs ein Strom ist, mit dem die Schmelzelektroden (7) betrieben werden sollen oder den der erste Wechselrichter (4) in den Transformator (5) einspeisen soll, oder eine Spannung ist, mit der die Schmelzelektroden (7) betrieben werden sollen oder die der erste Wechselrichter (4) an den Transformator (5) anlegen soll, oder eine den Schmelzelektroden (7) oder dem Transformator (5) zuzuführende Leistung ist.

3. Energieversorgungseinrichtung nach Anspruch 1 oder 2, **dadurch gekennzeichnet, dass** der Sollbetriebsparameter (P2*) für den elektrischen Antrieb (13) ein dem elektrischen Antrieb (13) zuzuführender Strom, ein vom elektrischen Antrieb (13) abzugebendes Moment, eine Drehzahl des elektrischen Antriebs (13) oder dessen Lage ist.

4. Energieversorgungseinrichtung Anspruch 1, 2 oder 3, **dadurch gekennzeichnet, dass** die Steuereinrichtung derart ausgebildet ist, dass von ihr im Betrieb Betriebsparameter (P) des ersten Wechselrichters (4) erfasst werden, die erfassten Betriebsparameter (P) mit Erwartungswerten (PE) verglichen werden und in Abhängigkeit von dem Vergleich eine Meldung (M) an einen Bediener (9) und/oder eine übergeordnete Steuereinrichtung (10) ausgegeben wird.
